# EUROPEAN PATENT SPECIFICATION

(11) **EP 1 314 770 B1**
(45) Date of publication and mention of the grant of the patent: **02.01.2004**
(21) Application number: 01811148.4
(22) Date of filing: 27.11.2001
(51) Int. Cl.: C10G 1/02, F23G 5/027, F23G 5/30, F23G 5/50

(54) **A batch process for the pyrolysis of cuttings of organic material and a fluidized bed reactor for carring out the process.**
Diskontinuierliches Verfahren zur Pyrolyse von organischem Schnittgut und Wirbelbettreaktor dafür
Procédé en discontinu pour la pyrolyse de matière organique coupée et réacteur à lit fluidisé pour ce procédé

(43) Date of publication of application: 28.05.2003
(73) Proprietor: Affolter, Jean, 1162 Saint-Prex (CH)
(72) Inventor: Affolter, Jean, 1162 Saint-Prex (CH)
(74) Representative: Besse, François

(56) References cited:
- WO-A-99/33907
- US-A- 6 046 370

## Description

The invention is related to batch process for the pyrolysis of cuttings of organic material, included waste materials, by the use of a mechanical fluidized bed reactor comprising a shell, filled with a revolving mixer driven by an electric motor, the shell being heated by electricity and comprising means to monitor the weight of content of the shell, the electric current flow to the heating system, to yield a non-condensable fraction of gas, oil, and a carbonaceous solid residue.

Molecules of organic matter can be split in smaller ones under the influence of heat and the exclusion of oxygen. This phenomenon is called pyrolysis or thermolysis, both words have the same meaning. The pyrolysis occurs as a transient stage in the combustion process in general, the pyrolysis preceding and overlapping with the combustion. An example of pyrolysis is an open wood fire, wherein the combustion reaction is not complete, and pyrolytic products are carried away in the smoke. Another example of pyrolytic products of everyday's life is the smoke of a burning cigarette. The pyrolysis of wood for obtaining some basic chemicals such as acetic acid, methanol, phenols, etc...is probably the oldest industrial pyrolytic process. The advent of the oil industry has superseded the pyrolysis of wood, and the pyrolysis as an industrial process in general has since fallen into oblivion.

The increasing amount of organic wastes produced by our industrial society today, combined with the relentless trend to prohibit dumping of wastes without prior treatment for reducing the amount, has revived the interest in pyrolysis. Most of the industrial wastes, and even household wastes are not easy to burn, the furnaces for regular fuels such as oil and coal must be modified for burning wastes. This has so far not always been possible to the degree of achievement aimed at, and for instance plain household wastes produce a mixture of combustion gas containing a wide range of undesired by-products, as well gaseous as solid, the latter in the form of dust. For releasing a clean combustion gas complying with the environmental regulation, the combustion gas mixture must be processed further in a scrubber line which cost is in the same range as the furnace. On the other hand the pyrolysis of organic wastes, and the separation of the produced gaseous and liquid fuel from the rest of the products is an attractive choice, which has gained general acceptance. The pyrolysis can be performed in a range of temperature from 300° to 600°C, the requested heat supply is moderate, further there is no formation of nitrogen oxides at this temperature, and the quantity of gas to be scrubbed is small compared to the combustion. The gas can be used as a fuel for a standard reciprocating gas motor, the oil for a standard slow revolving two strokes diesel engine, and the carbonaceous residue which is similar to industrial coke for a power plant or a cement kiln. Pyrolysis processes for a wide range of wastes have been described in the literature, including household wastes, wood, paper, cardboard, plastics, rubber, tires, etc... Although the pyrolysis of organic wastes is hailed a good process in general, there is an evident gap between the number of publications dedicated to pyrolysis and the number of industrial plants in successful operation world wide. The reason of the failure to scale up successfully a laboratory process to an industrial one, is mainly due to the wrong assessment of the heat transfer in the reactor, the selection of an inadequate type of reactor with regard to the kind of waste to be treated, and unsolved problems of solid material mixing within the reactor. The graveyard of abandoned pyrolysis plants is not the sole contribution of enthusiastic tinkers, large international corporations have also contributed to it.

Nonetheless, when solid organic materials, and especially solid waste materials are pyrolyzed by a mechanical fluidized bed reactor, there are two technical difficulties to overcome.

First, the plastic transition phase is one if them. Most of the organic materials amenable to a pyrolysis reaction, undergo several stages until the pyrolysis reaction is completed. First the materials must be heated up to the temperature at which the pyrolysis reaction proceeds. Most of the said materials do not have a sharp melting point if any, but become softer as the temperature rises. At some point the materials turn to a highly viscous state, called hereon the plastic transition stage. The crumbs of the materials being pyrolyzed have a soft core coated with a layer of highly viscous liquid, its thickness depends among others on the specific material. The crumbs are then prone to stick together, in consequence the torque of the mixer increases, sometimes well beyond the designed value, depending on the material processed. As a result, the motor is switched off by its safety relay. In case of this event, it is unlikely that the motor can be restarted without prior emptying the reactor. This operation requires the shut down of the heating system, waiting for the reactor and its content to cool down to ambient temperature, and ultimately remove all the material by hand through the manhole. Evidently, this situation must be avoided at all cost.

Second, materials refractory to pyrolysis, called hereon alien materials, and mixed with the materials to be pyrolyzed, are another problem. Metals and minerals are typical alien materials, and commonly found in wastes. Usually they have been added by the manufacturer for obtaining a product with specific properties. Tires for instance contain steel threads, steel wires and steel cables, silica, and sand taken up by the tread on the road; paper, card board and wood contain silica, calcium carbonate, staples, clamps, and nails; plastics may contain metal items associated with packing material and fiberglass. These alien materials may clump together, evolve into large aggregates which prevent the reactor from operating correctly, choke the outlet conduit for the solid products, or block the solid transport line downstream the reactor. The alien materials, regarding their aggregation behavior, may be classified in two categories. First the minerals, for instance glass, sand, and non ferrous metals such as zinc, aluminum, etc..., having a low melting point. The mixture of these materials may form hard aggregates, consisting of small particles, which are sintered together, wherein glass and metals with low melting points act as a binder. Second the steel threads and wires, which are rolled by the mixing paddles into compact balls.

A straight forward idea for solving the problem with the alien materials is to separate them entirely prior to the pyrolysis. Practically, this cannot be done economically, with regard to the price of the pyrolysis products.

The problem with the plastic transition phase has been correctly addressed in the US-A-6'046'370, wherein a reactor with a mechanical mixing is used. In the said patent the batch of material is added to a part of carbonaceous residue in the reactor, which is produced by the previous batch. The carbonaceous residue coats the crumbs which are then unable to stick together during the stage of the plastic phase. As a result the increase of the torque on the mixer is moderate and well below the overload value of the motor.

Nonetheless, the said patent leaves the problem related to the formation with the aggregates unsolved. The growth of aggregates depends on motion and time, and the pattern of the aggregates changes with time from a large population of small particles to a few large particles. After every batch a part of the carbonaceous residue is left in the reactor, while the other part is emptied. The aggregates are split approximately in the same ratio as the carbonaceous residue, that means that every batch contains aggregates from the first batch when the reactor was primed with a carbonaceous material free of alien materials. As the aggregates will grow in size, there will be soon or later a time when one aggregate is large enough for blocking the solid transport system downstream of the reactor, or even worst, may grow so large that it cannot pass the outlet conduit. When this happen, the heating of the reactor must be stopped, one has to wait until it has cooled down, and the solid material within must be removed by hand through the manhole. Evidently, the process described in the US-A-6'046'370, and which solves satisfactorily the plastic transition stage problem, amplifies problem with the aggregates. WO 99/33907 refers to a method for pyrolyzing automobile tire cuttttting making use of a fluidized bed reactor which encounters, however, the same problems as cited here above concerning the uncontrolled growth of aggregates.

It is the object of the invention to provide a process, and additional mechanical embodiments to the mechanical fluidized bed reactor for solving the problem with the plastic transition stage and the formation of aggregates simultaneously.

The batch process according the present invention is defined in the characterizing portion of the claim 1.

The invention will now disclosed and the annexed figures illustrates various embodiments.
Fig1 shows a diagram of a reactor.
Fig 2 is a cross section along II-II of fig 1
Fig 3 is representation of a plowshare mixing paddle.
Fig 4 is a cross section along IV-IV of fig 3
Fig 5 is a representation of a flat impeller mixing paddle.
Fig 6 is a cross section along V-V of fig 5
Fig 7 and 8 is the representation of another embodiment of the mixing paddles of fig 3 and 5.
Fig 9 to 11 depict respectively the current flow to the electric motor, to the heating system and the content of the reactor versus time curves of the priming batch.
Fig 12 to 14 depict respectively the current flow to the electric motor, to the heating system and the content of the reactor versus time curves of the rest of batches.

The invention disclosed herein pertains to the pyrolysis on an industrial scale of solid organic materials in general, included solid waste materials. The list of materials adequate to the pyrolysis process described herein comprises but is not limited to wood, paper, card board; also rubbers and elastomers, containing or not chemically bonded fluorine, chlorine, and nitrogen; tires of all kind; plastics and polymers of all kind; food wastes, dried wastes from slaughter houses, fish and cattle meal, etc...

Prior to the pyrolysis, dense materials are shredded to crumbs having about 2.54 cm (one inch) in size, while light and fluffy materials are densified by agglomeration, and granulated to particles 2.54 cm (one inch) in size by any method which is a standard of the art, for instance pelletisation, mechanical compacting and extrusion, etc...The reduction of size of the material as well as the agglomeration are not a part of the invention.

The scope of the invention encompasses a specific way for operating a mechanical fluidized bed reactor, the purpose being the pyrolysis of organic material in general, and additional embodiments incorporated in the said reactor.

The process steps are described hereon, and the invention will become apparent to the one versed in the art.

The material to be pyrolyzed must first be transformed into a form amenable to the invention, and is shredded to crumbs of about 2.54 cm (one inch) in size. During the shredder a part of the alien material embedded in the material to be pyrolyzed, for instance glass fibers, metal wires, etc...is torn off. The loose alien material is separated from the crumbs by a standard process of the art, for instance a magnetic separator, a dry classifier, etc...

The crumbs containing a part of the alien material ,adequate for the pyrolysis reaction, are pyrolyzed, and the alien material eventually separated after completion of the pyrolysis reaction from the carbonaceous residue, if requested, by a standard method of the art.

The amount of the complete batch of material to be processed is fixed for having after completion of the pyrolysis reaction a volume of 70% carbonaceous residue to the volume of the reactor. An amount of about one tenth of the complete batch, called hereon the priming batch, is added into the reactor first in one lump. This step is different from the US-A-6'046'370, wherein all the charge is added in one lump to the reactor partly filled with carbonaceous residue. The plastic transition stage effect is not attenuated, but taking a small amount of the planned batch only, the effect of the plastic transition stage is reduced to the same proportion, and the risk of blocking the mixer is nil. The speed of the mixer is not critical at this stage, one will take a value which is known to be at least in the fluidization range or beyond, namely corresponding to a number of Froude N(Fr) larger than 2.5. Once the reaction is completed with the priming batch, the angular velocity of the mixer is adjusted to the lowest torque value for the rest of the batch. The rest of the batch is added continuously, at a rate calculated from the data collected during the pyrolysis of the priming batch. Details on the calculation are explained further, and the splitting of a complete batch in two parts is a key feature of the invention. For the sake of clarity, the complete batch is the sum of the priming batch, namely approximately one tenth of the complete batch, and the rest of the batch approximately nine tenth of the complete batch. The lowest torque correlates with the lowest ratio of current flow (ampere) to the motor divided by the angular speed (radian).

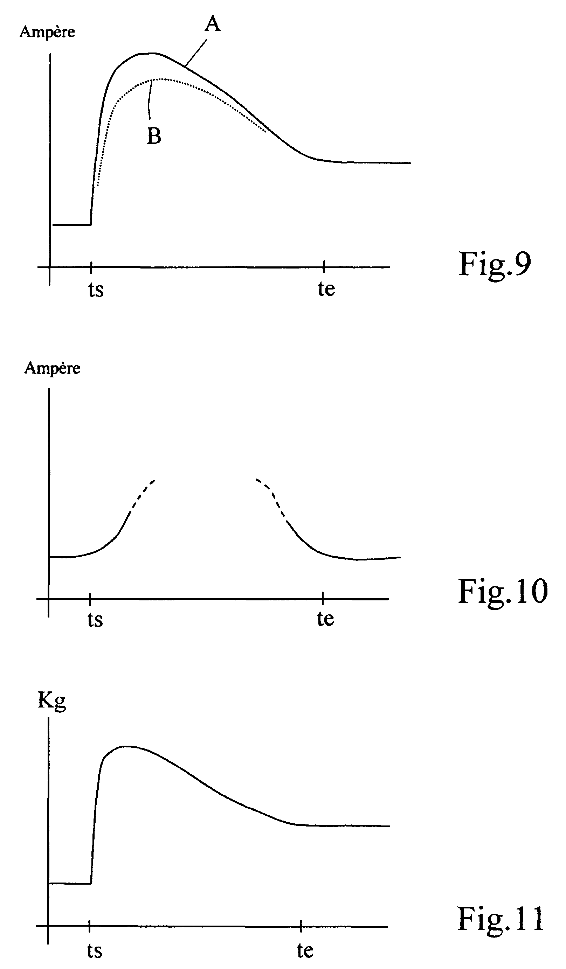

The data of weight, electric current flows to the heating system and the motor are continuously monitored, and from the said data it is possible to determine the period of time for completing the pyrolysis reaction. Typical curves of a specific data versus time are rendered in the Fig.9 to 11 regarding the priming batch. The start time of the pyrolysis reaction is referenced ts and the end time of the pyrolysis reaction te.

Fig 9 depicts the current flow variation to the electric motor versus time. A is the experimental curve with material having a plastic transition stage and B the curve of an ideal material having no plastic transition stage. The electric current to the motor increases by a substantial amount from the empty to the filled state of the reactor, and continues to increase when the plastic transition stage comes into effect. While the pyrolysis reaction proceeds, the current stabilizes at a constant value when the pyrolysis reaction is completed.

Fig 10 depicts the current flow versus time to the heating system. The current flow to the heating system increases upon the addition of the material to be pyrolyzed, but there is no similar pattern for the curves of all the materials amenable to pyrolysis. The aspect of the curve depends on the number of distinct reaction steps comprised in the global pyrolysis reaction, and the enthalpy of pyrolysis of each one. The pyrolysis reaction is deemed to be completed when the electric current flow returns to a constant value.

Fig 11 depicts the content of the reactor versus time. The weight content of the reactor increases by an amount equal to the amount of the priming batch at the start of the pyrolysis reaction, and decreases continuously as the pyrolysis reaction proceeds, and stabilizes at a constant value when the reaction is completed.

The correct interpretation of the curves versus time of the electric current flow to the motor, the heating system, and the weight content of the reactor allow to determine the end of the pyrolysis reaction.

The amount of the priming batch, m1 in kg, divided by the period of time t1 requested for completing the pyrolysis reaction equals to the flow rate at which the rest of the batch is to be added. Under this condition, every addition of material is done on carbonaceous material produced in situ, the rate of addition of the material to be pyrolyzed equates the rate of the pyrolysis reaction, and the effect of the plastic transition stage is under control.

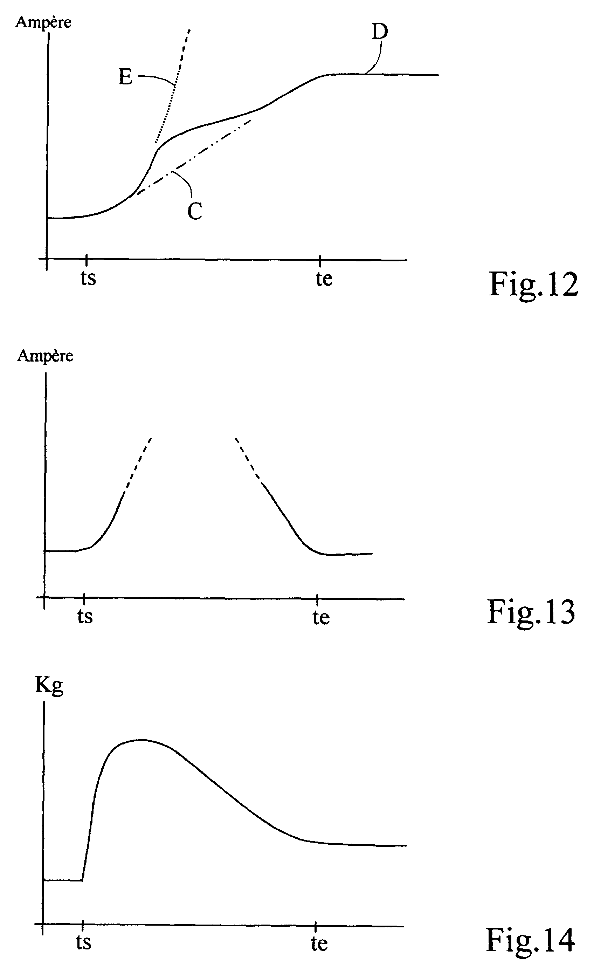

Once the pyrolysis reaction is completed, the reactor is entirely emptied, and this process step is different from the US-A-6'046'370, wherein a part of the carbonaceous residue is left in the reactor. Therefore the growth of the aggregates is limited to the period of time of the pyrolysis reaction of a single batch, and the problem related to the formation of aggregates is practically eliminated when using the process described herein. Typical curves of specific data versus time are rendered in Fig.12 to 14.

Fig 12 depicts the current flow variation of the electric motor versus time. C is the curve of an ideal material having no plastic transition stage. D is the experimental curve with material having a plastic transition stage by using the invention. E is a possible experimental curve with material having a plastic transition stage by not using the invention. The experimental curve of the electric flow to the motor versus time increases with the addition of the material to be pyrolyzed, the ascending part of the curve shows a slight bump, which is due to the plastic transition stage when the process is conducted in accordance with the invention. By comparison, the curve of an ideal material having no plastic transition stage is also rendered. If the process described in the invention is not used, the increase of the current flow may be much more important than indicated (E).

The curves versus of the current flow to the heating system (Fig13), and the weight content of the reactor (Fig 14) are similar to the ones indicated for the priming batch.

A fluidized bed reactor for carrying out the process according to the present invention is defined in claim 8.

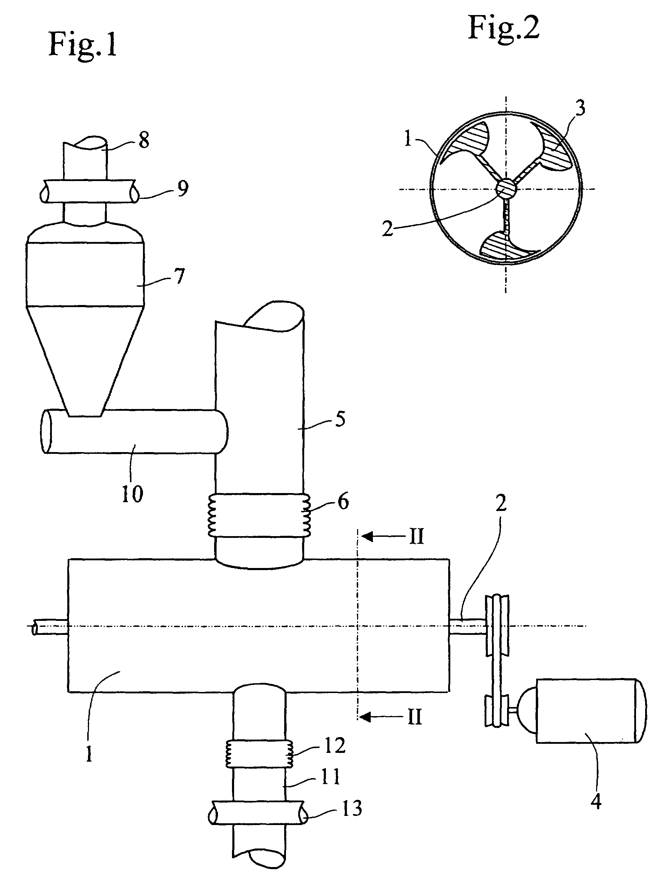

The reactor (Fig 1, 2) is a mechanical fluidized bed consisting of a horizontal laying steel cylinder 1, closed at both ends by plates, fitted with a revolving shaft 2 placed along the axis of the cylinder, and heated by electricity from outside. The cylindrical part of the reactor is called hereon the reactor shell. The shaft 2 carries mixing paddles 3 (fig 2), having preferably but not limited to a plowshare shape, and is driven by an electric motor 4. The shaft 2 and the mixing paddles 3 are called the mixer. The length to the diameter ratio of the reactor shell 1 is usually in but not limited to the range from 2 to 3.5. The reactor may be filled by material to be pyrolyzed up to 70% of its volume capacity. The reactor is resting on a frame supported by weight sensors for monitoring continuously the amount of material in the reactor. The angular velocity of the mixer can be adjusted to the desired value, and the current flow (ampere) to the motor 4 is continuously monitored. The electric heating system can adjust the temperature of the reactor shell in the range from 200°C to 650°C. The current flow (ampere) to the heating system is continuously monitored.

The material to be pyrolyzed is preferably added through a vertical conduit 5 placed on the top of reactor shell, and in its middle, while other arrangements are also possible. The vaporized hydrocarbons escape through the vertical conduit 5, which is provided with a bellows expansion joint 6. The material to be pyrolyzed is introduced in a bin 7 through an inlet 8 closed by a gas tight gate valve 9. the material to be pyrolized is driven until the vertical conduit 5 by a screw conveyor 10. The solid residue left in the reactor after completion of the pyrolysis reaction is preferably removed by a vertical conduit 11 placed at the bottom of the reactor shell 1, and in its middle, while other arrangements are also possible. The conduit 11 is provided with a bellows expansion joint 12 and closed by a gas tight gate valve 13.

The reactor can operate by using the vacuum mode, in the range from 0,6 bar (abs) to 1 bar (abs). In this case no addition of inert gas is necessary for carrying the gas and oil produced by the pyrolysis reaction out of the reactor. The reactor can also operate by using the carrier inert gas mode, preferably nitrogen or carbon dioxide. In this case a pressure slightly over 1 bar (abs) will prevail in the reactor, usually in the range of 1 to 1.5 bar (abs) for compensating the pressure drop in the process line downstream the reactor.

When the mixer is revolving at low speed, the material to be processed lays at the bottom of the reactor. Because of the contact area between the material to be pyrolysed and the heated surface of the reactor is reduced approximately to the half of the total available, and also the inefficient mixing, the heat transfer rate is low. When the angular velocity is gradually increased, a range is found wherein the material is fluidized, namely aims at an even distribution in the reactor. Within the fluidization range, the torque of the mixer aims at a minimum value, and the heat transfer rate increases to a range from 250 to 350 Watt / °K x m(2), depending on the particular conditions. When the angular velocity of the mixer increases further, the fluidization state vanishes. Due to the high centrifugal force against the negligible force of gravity, the material to be pyrolyzed is concentrated close to the surface of the reactor shell, while the inner core of the reactor aims at being void of solid material. The gain of heat transfer is negligible compared to the increase of power requested by the mixer, the right way to operate a mechanical fluidized bed as described herein, is to adjust the angular velocity of the mixer within the fluidization range. It is known that the fluidization is achieved when the Froude number N(Fr) is in the range from 2 to 3, N(Fr) being equal to the squared angular velocity multiplied by the radius of the reactor shell and divided by gravity constant. The correct N(Fr) value related to a specific situation correlates with the angular velocity of the shaft at which the torque is minimum.

A mechanical fluidized bed reactor as described herein does not meet the problems reported earlier with other types of reactors, among others the heat transfer rate and the mixing of solid material, and its application is not limited to some specific waste materials, but adequate for pyrolyzing solid organic materials in general.

In the case a batch being processed must stay a longer than the regular period of time in the reactor, for instance because of a breakdown somewhere in the process line downstream the reactor, and consequently the reactor cannot neither be emptied before the repair is done, nor the mixer stopped, some mechanical embodiments described hereon will help to keep the growth of the aggregates under control.

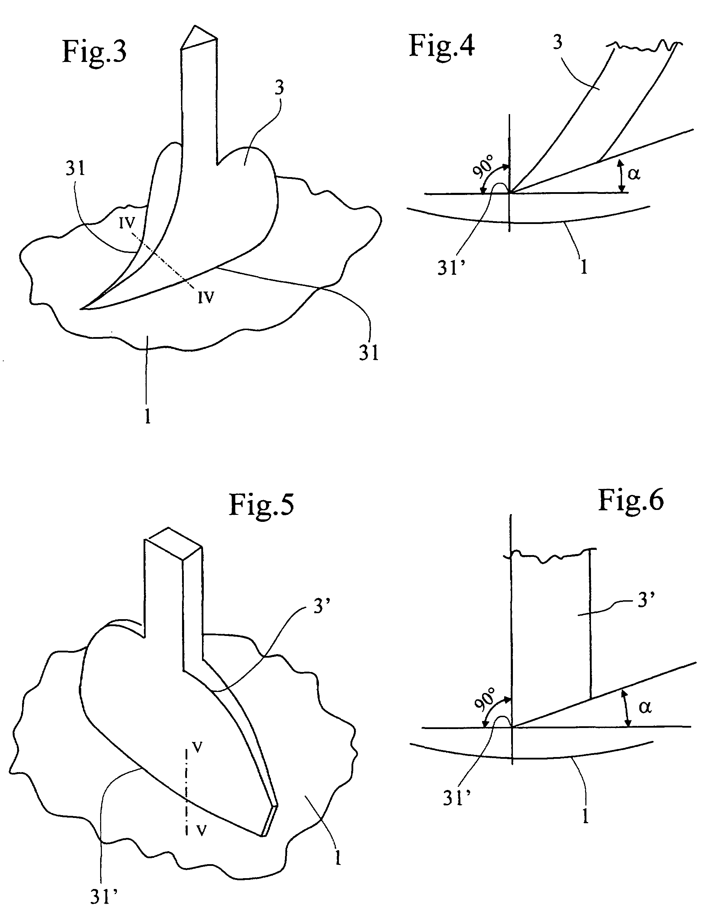

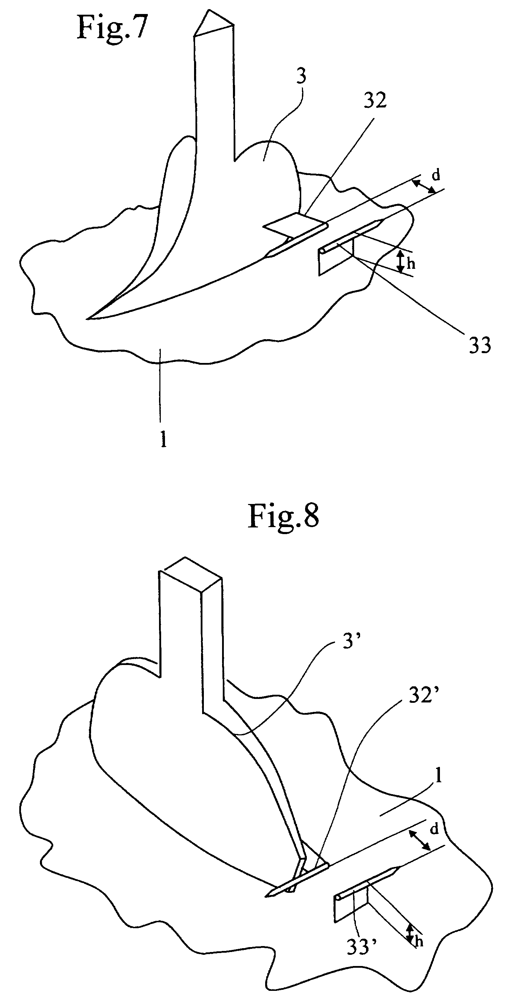

Figures 3 and 7 show a plowshare while Figures 5 and 8 show a flat impeller, both given as example of a mixing paddle.

The edge 31, 31' of each of the mixing paddles 3, 3' close to the reactor shell 1 is made sharp and angular. The angle α ( Fig 4, 6) of the rim of the mixing paddle to the inner surface of the reactor is preferably comprised within, but not limited to 5° and 15°, but not less than 5°. The edge 31, 31' is preferably hardened on the side moving the material, by an adequate technique which is not a part of this invention. The sharp edge contributes to break down the aggregates. This embodiment is not limited to these particular kinds of mixing paddle.

For keeping the growth of the balls of steel threads and wires under control, namely limiting their growth to a fixed level which can be tolerated, another embodiment described with reference to Fig 7 and 8 will help. A spike 32, 32', called hereon the mobile spike, is fixed on the mixing paddle 3, 3', at the downstream edge with regard to the flow of solid material, close to the surface of the reactor 1, pointing in the direction of motion of the paddle 3, 3'. Another spike 33, 33', called hereon the static spike, is fixed on the reactor shell 1, close to, and parallel to the plane defined by the circular path of the mobile spike 32, 32', and pointing in the opposite direction.

A ball of steel threads or wires hit by the paddle 3, 3' will preferably roll along with the deflected flow of material, and is prone to be spitted by the mobile spike 32, 32'. When the ball faces the static spike 33, 33', it is torn apart. The best results are obtained when the dimensions designated d and h in Figures 7, 8 are in a ratio d/h varying from 1 to 2, while d is varying from 60 to 100 mm. The length of both spikes 32, 33 and 32', 33' is the same, and is at best comprised between 20 to 40 mm, while the diameter of the spike should not be over 10 mm. Adjustments outside of this range are unlikely to provide an improvement. For testing the said embodiment, a set of large balls of steel threads, and another set with steel wires, some of them up to a diameter measuring 300 mm, have been prepared by rolling loose threads and wires in an empty reactor for several days. After fitting the paddles and the reactor shell with spikes, and pursuing the test under the same conditions, after 8 hours of operation no ball larger than 60 mm was found.

The invention described herein has some additional advantages described hereon compared to the US-A-6'046'370
a. The down time during end of the processing time of a complete batch and the beginning of the next one, is mainly governed by the adjustment of the pressure inside the reactor to the environment, and taking off all the solid residue. As a complete batch according to the invention is much larger than a batch related to US-A-6'046'370, to one process stop when using the invention several are needed with US-A-6'046'370. In other words, the processing capacity of a reactor is increased when using the invention compared to US-A-6'046'370.
b. The process disclosed in the invention is similar to a continuous process including regularly scheduled short stops for filling and emptying the reactor, and generates a constant mass flow downstream of gas and oil downstream the reactor when the pyrolysis reaction proceeds, while the US-A-6'046'370 delivers the gas and oil at a variable rate. The consequence is that the equipment in the case of the said patent must be sized to the peak value of the mass flow of gas and oil, and a peak value being always higher than an average value, therefore the investment and operation costs of the equipment for gas and oil downstream the reactor are higher in the said patent than with the invention.

## Claims

1. A batch process for the pyrolysis of cuttings of organic material, included waste materials, by the use of a mechanical fluidized bed reactor comprising a shell, filled with a revolving mixer driven by an electric motor, the shell being heated by electricity and comprising means to monitor the weight of content of the shell and the electric current flow to the heating system, to yield a non-condensable fraction of gas, oil and a carbonaceous solid residue, **characterized by** the addition to said reactor of approximately one tenth of the batch in one lump first and the rest of the batch after and continuously and not before the first part is entirely pyrolyzed.

2. A process according to claim 1, wherein the said cuttings have a size of about 2.54 cm (one inch).

3. A process according to one of claims 1 or 2 wherein the organic material, whether a waste or not, comprises wood, paper, card board; rubbers and elastomers, containing or not chemically bonded fluorine, chlorine, and nitrogen; tires of all kind with regard to the size and manufacturer; plastics and polymers of all kind, containing or not chemically bonded fluorine, chlorine, and nitrogen; food wastes from processing factories; dried wastes from slaughter houses, animal cadavers, fish and cattle meal.

4. A process according to one of claims 1 to 3, wherein the part consisting approximately of one tenth of the batch and having a mass m1 is added to the empty reactor while the angular speed of the mixer correlates with a number of Froude larger than 2.5 and wherein data of the weight of the content of the reactor and of the electric current flow to the heating system and the motor are continuously collected to determine the period of time for the completion of the pyrolysis reaction.

5. A process according to one of claims 1 to 4, wherein after completion of the pyrolysis reaction of the first part, consisting approximately of one tenth of the batch, the angular velocity of the mixer is adjusted to the minimum torque value.

6. A process according to one of the claims 1 to 5, wherein the rest of the batch, which amounts approximately nine tenth of the total batch, is added at a rate equal to m1 / t1, t1 being the requested time for completing the pyrolysis of the first part.

7. A process according tone of claim 1 to 6, wherein the said cuttings are pyrolyzed with their content of metal and mineral material which is not amenable to pyrolysis.

8. A fluidized bed reactor for carrying out the process according to claim 1, comprising a horizontal laying steel cylinder (1), closed at both ends by steel plates, the revolving shaft (2) is placed along the axis of the cylinder, with mixing paddles (3) fixed on it, the cylindrical part of the reactor is heated from outside by electricity, wherein the edge (31, 31') at the end of each paddle (3) close to the inner surface of the reactor (1), on the side moving the material is angular and sharp, the angle of the rim of the mixing paddle and the inner surface of the reactor is not less than 5°, preferably comprised in the range of 5° to 15°, and wherein a spike (32, 32') is placed on each paddle (3), on the downstream edge with regard to the flow of material, close to the inner surface of the reactor (1), and pointing to the sense of rotation of the mixer; while another spike (33, 33') is placed on the inner surface of the reactor (1), placed close to the passing by spike (32, 32') fixed on the paddle (3) and pointing to the sense opposed to the rotation of the mixer.

## Patentansprüche

1. Chargenverfahren für die Pyrolyse von Abschnitten aus organischem Material, einschließlich Abfallstoffen, mittels der Benutzung eines mechanischen Wirbelbettreaktors, der ein Gehäuse umfasst, das mit einem umlaufenden Mischer ausgestattet ist, der durch einen Elektromotor angetrieben wird, wobei das Gehäuse elektrisch beheizt wird und Mittel umfaßt, die das Gewicht des Inhalts des Gehäuses und den elektrischen Stromfluß zu dem Heizsystem überwachen, um eine nicht kondensierbare Fraktion von Gas, Öl und einen kohlenstoffhaltigen festen Rückstand zu ergeben, **gekennzeichnet durch** die Zugabe zuerst ungefähr eines Zehntels der Charge auf einmal und dann des Restes der Charge, kontinuierlich und nicht bevor der erste Anteil vollkommen pyrolysiert ist, in den Reaktor.

2. Verfahren nach Anspruch 1, wobei die Abschnitte eine Größe von etwa 2,54 cm (ein Zoll) aufweisen.

3. Verfahren nach einem der Ansprüche 1 oder 2, wobei das organische Material, ob Abfall oder nicht, umfaßt: Holz, Papier, Pappe; Kautschuke und Elastomere, chemisch gebundenes(n) Fluor, Chlor und Stickstoff enthaltend oder nicht; Reifen aller Art hinsichtlich der Größe und des Herstellers; Kunststoffe und Polymere aller Art, chemisch gebundenes(n) Fluor, Chlor und Stickstoff enthaltend oder nicht; Lebensmittelabfälle aus Verarbeitungsfabriken; getrocknete Abfälle aus Schlachthäusern, Tierkadaver, Fisch- und Viehmehl.

4. Verfahren nach einem der Ansprüche 1 bis 3, wobei der Anteil, der aus ungefähr einem Zehntel der Charge besteht und eine Masse ml aufweist, in den leeren Reaktor gegeben wird, während die Winkelgeschwindigkeit des Mischers mit einer Froude-Zahl von größer als 2,5 korreliert, und wobei fortwährend Daten des Gewichts des Inhalts des Reaktors, des elektrischen Stromflusses zu dem Heizsystem und dem Motor erfaßt werden, um den Zeitraum bis zum Abschluß der Pyrolysereaktion zu bestimmen.

5. Verfahren nach einem der Ansprüche 1 bis 4, wobei nach dem Abschluß der Pyrolysereaktion des ersten Anteils, der aus ungefähr einem Zehntel der Charge besteht, die Winkelgeschwindigkeit des Mischers auf den Mindestdrehmomentwert eingestellt wird.

6. Verfahren nach einem der Ansprüche 1 bis 5, wobei der Rest der Charge, der ungefähr neun Zehntel der gesamten Charge beträgt, mit einer Geschwindigkeit, die gleich ml/tl ist, wobei tl die erforderliche Zeit zum Abschließen der Pyrolyse des ersten Anteils ist, zugegeben wird.

7. Verfahren nach einem der Ansprüche 1 bis 6, wobei die Abschnitte mit ihrem Metall- und Mineralstoffgehalt, der nicht durch Pyrolyse zugänglich ist, pyrolysiert werden.

8. Wirbelbettreaktor zum Ausführen des Verfahrens nach Anspruch 1, umfassend einen waagerecht liegenden Stahlzylinder (1), der an beiden Enden durch Stahlplatten verschlossen ist, wobei die umlaufende Welle (2) längs der Achse des Zylinders angebracht ist und Mischschaufeln (3) an ihr befestigt sind, wobei der zylindrische Abschnitt des Reaktors von außen elektrisch beheizt wird, wobei die Kante (31, 31') an dem Ende jeder Schaufel (3) in der Nähe der inneren Oberfläche des Reaktors (1) auf der Seite, die das Material bewegt, winkelförmig und scharf ist, wobei der Winkel des Randes der Mischschaufel mit der inneren Oberfläche des Reaktors nicht weniger als 5° beträgt und vorzugsweise in dem Bereich von 5° bis 15° enthalten ist, und wobei an jeder Schaufel (3) an der in bezug auf den Materialfluß stromabwärts befindlichen Kante nahe der inneren Oberfläche des Reaktors (1) und in die Drehrichtung des Mischers weisend ein Dorn (32, 32') angebracht ist, während an der inneren Oberfläche des Reaktors (1) in der Nähe des Durchgangs von Dorn (32, 32'), der an der Schaufel (3) befestigt ist, und in die entgegengesetzte Drehrichtung des Mischers weisend ein weiterer Dorn (33, 33') angebracht ist.

## Revendications

1. Procédé à charge pour la pyrolyse de chutes de matériau organique, y compris des matériaux de déchets, par l'utilisation d'un réacteur mécanique à lit fluidisé, comprenant une coque, remplie d'un malaxeur rotatif entraîné par un moteur électrique, la coque étant chauffée par de l'électricité et comprenant des moyens pour surveiller le poids du contenu de la coque et le débit de courant électrique en direction du système de chauffage, pour fournir une fraction non condensable de gaz, une huile et un résidu solide charbonneux, **caractérisé par** l'addition audit réacteur d'approximativement un dixième de la charge en un lot, tout d'abord, et le restant de la charge, par la suite et en mode continu, mais non avant la pyrolyse complète de la première partie.

2. Procédé selon la revendication 1, dans lequel lesdites chutes ont une taille d'environ 2,54 cm (un pouce).

3. Procédé selon l'une quelconque des revendications 1 ou 2, dans lequel le matériau organique, qu'il s'agisse de déchets ou non, comprend du bois, du papier, du carton ; des caoutchoucs et des élastomères, contenant ou ne contenant pas du fluor, du chlore et de l'azote lié de manière chimique ; des pneus de tous genres pour ce qui est de la taille et du fabricant ; des matières plastiques et des polymères de tous genres, contenant ou ne contenant pas du fluor, du chlore et de l'azote lié de manière chimique ; des déchets alimentaires provenant d'usines de traitement ; des déchets séchés en provenance d'abattoirs, de cadavres d'animaux, de poissons et de farine de bovins.

4. Procédé selon l'une quelconque des revendications 1 à 3, dans lequel la partie, se composant approximativement d'un dixième de la charge et ayant une masse ml, est ajoutée au réacteur vide, alors que la vitesse angulaire du malaxeur présente une corrélation avec un chiffre de Froude supérieur à 2,5 et dans lequel les données relatives au poids du contenu du réacteur et au débit de courant électrique en direction du système de chauffage et du moteur sont recueillies en continu pour déterminer la période de temps requise pour l'achèvement de la réaction de pyrolyse.

5. Procédé selon l'une quelconque des revendications 1 à 4, dans lequel, après l'achèvement de la réaction de pyrolyse de la première partie se composant approximativement d'un dixième de la charge, la vitesse angulaire du malaxeur est ajustée à la valeur de couple minimale.

6. Procédé selon l'une quelconque des revendications 1 à 5, dans lequel le reste de la charge, qui se monte à approximativement neuf dixièmes de la charge totale, est ajouté à une vitesse égale à ml/tl, tl étant le temps requis pour l'achèvement de la pyrolyse de la première partie.

7. Procédé selon l'une quelconque des revendications 1 à 6, dans lequel lesdites chutes sont pyrolysées avec leur contenu de métal et de matériau minéral qui n'est pas approprié à la pyrolyse.

8. Réacteur à lit fluidisé destiné à l'exécution du procédé selon la revendication 1, comprenant un cylindre en acier, couché de manière horizontale (1), fermé aux deux extrémités par des plaques en acier, l'arbre rotatif (2) étant placé le long de l'axe du cylindre, avec des pales de malaxage (3) fixées sur ce dernier, la partie cylindrique du réacteur étant chauffée de l'extérieur grâce à de l'électricité, dans lequel le bord (31, 31') à l'extrémité de chaque pale (3), proche de la surface interne du réacteur (1), sur le côté déplaçant le matériau est angulaire et aiguisé, l'angle du bord de la pale de malaxage et de la surface interne du réacteur n'est pas de moins de 5°, est compris de préférence dans le domaine allant de 5° à 15° et dans lequel une pointe (32, 32') est placée sur chaque pale (3), sur le bord en aval par rapport à l'écoulement du matériau, proche de la surface interne du réacteur (1) et orientée dans la direction de rotation du malaxeur ; alors qu'une autre pointe (33, 33') est placée sur la surface interne du réacteur (1), placée au voisinage du passage par la pointe (32, 32'), fixée à la pale (3) et orientée dans le sens opposé à la rotation du malaxeur.
